Europäisches Patentamt

European Patent Office

Office européen des brevets

(19)

(11) Publication number: **0 167 319 B1**

# EUROPEAN PATENT SPECIFICATION

(12)

(45) Date of publication of patent specification: **24.07.91**   (51) Int. Cl.⁵: **F16D 23/06**

(21) Application number: **85304287.7**

(22) Date of filing: **14.06.85**

(54) **Inertia lock type synchronous clutch mechanism.**

(30) Priority: **14.06.84 JP 120741/84**
**14.06.84 JP 120743/84**

(43) Date of publication of application:
**08.01.86 Bulletin 86/02**

(45) Publication of the grant of the patent:
**24.07.91 Bulletin 91/30**

(84) Designated Contracting States:
**DE FR IT**

(56) References cited:
**DE-A- 2 030 916    DE-A- 3 225 201**
**DE-B- 1 061 631    DE-C- 960 961**
**FR-A- 2 268 986    FR-A- 2 390 633**
**GB-A- 1 273 898    US-A- 2 190 964**
**US-A- 2 364 331**

(73) Proprietor: **HONDA GIKEN KOGYO KABUSHIKI KAISHA**
**27-8, Jingumae, 6-chome**
**Shibuya-ku, Tokyo 150(JP)**

(72) Inventor: **Nishimura, Sadanori**
**299-10, Tsuchiya**
**Omiya-shi Saitama(JP)**
Inventor: **Kudo, Satoru**
**3-8-2, Shimizugaoka**
**Fuchu-shi Tokyo(JP)**

(74) Representative: **Leale, Robin George et al**
**FRANK B. DEHN & CO. Imperial House 15-19**
**Kingsway**
**London WC2B 6UZ(GB)**

## Description

This invention relates to an an inertia lock type synchronous clutch mechanism according to preamble of claim 1.

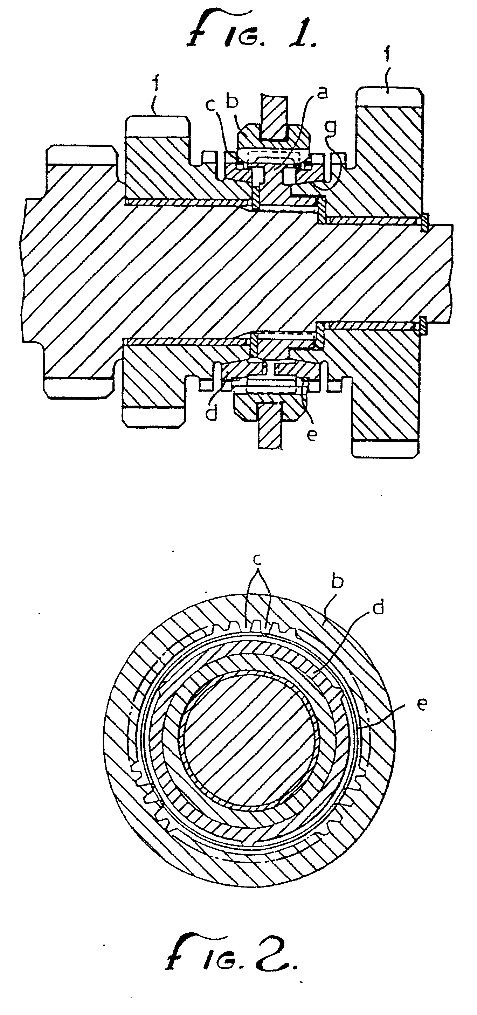

A mechanism of this general type is known in the prior art, for example from Japanese Patent Laid-Open No. 48-24096, and is illustrated by the accompanying "Prior Art" Figs. 1 and 2. Here an inertia lock type synchronous clutch mechanism has elastic ring members e on blocking rings d which ring members are arranged to be engaged by a sleeve b, splined to a clutch hub a, by way of a plurality of sloping cam portions c protruding from the inner circumference of the sleeve b. Thus the blocking rings d are moved axially into frictional engagement with tanered cone portions g of synchronized gears f, by the sleeve b.

In this known mechanism each of the said ring members e is generally in the form of a circular elastic ring which is mounted on the outer circumference of the boss portion of the corresponding blocking ring d. It is found that, upon the elastic ring members e being pressed and deformed radially inwardly at their portions engaged by the respective cam portions c, the rings bulge and deform radially outwardly at their portions between the cam-engaged portions. As a result, this mechanism has the disadvantage that the depth of the splines on the inner circumference of the sleeve b must be reduced to prevent interference with its movement by those bulging portions of the elastic ring.

It is known from DE-A-3 225 201 to provide an inertia lock type synchronous clutch mechanism in which an elastic ring member on a blocking ring is engageable by a plurality of circumferentially spaced sloping cam portions protruding from the inner circumference of a shift sleeve splined to a clutch hub so that said blocking ring is movable axially into frictional engagement with a tapered cone portion of a synchronized gear by force applied through said elastic ring member by the axial shifting of said sleeve, wherein said elastic ring member is provided at a plurality of circumferentially spaced locations corresponding to the said cam portions with elastic elements engageable by the cam portions, each said element comprising a discrete projection extending circumferentially a distance corresponding substantially to a said cam portion and protruding radially outwardly a substantially uniform amount along the circumferential extent of each said element relative to the remaining portions of the ring member which are not engageable by the cam portions, and said elements being elastically deformable by the cam portions in the radially inward direction to constrict the said ring member without causing said remaining portions of the ring member to deform radially outwardly to an extent which would interfere with splines of said inner circumference of the shift sleeve.

In the arrangement of DE-A-3 225 201 the elastic ring member is a split ring having at the split circumferentially spaced end portions which are bent round to the axial direction and engaged in axial recesses provided in the shift sleeve. This engagement prevents undesirable radially outward movement of the ring under the effect of "centrifugal" forces, but requires both the ring and the shift sleeve to be specially formed.

The present invention is characterised in that the ring member is one-piece having radially recessed portions between the radially outwardly protruding elastic elements, there being circumferentially spaced grooves in the outer circumference of the blocking ring arranged to receive said radially recessed portions to prevent excessive bulging of the elastic ring member upon engagement by the cam portions.

Preferably the elastic ring member is of endless, closed form.

Two embodiments of the invention will now be described by way of example, and in comparison with the aforementioned prior art mechanism, with reference to the accompanying drawings, in which:-

Fig. 1 is a longitudinal sectional view of an example of a prior art mechanism;

Fig. 2 is a transverse sectional view of the prior art mechanism shown in Fig. 1;

Fig. 3 is a longitudinal sectional view of a first embodiment of a synchronous clutch mechanism of the invention;

Fig. 4 is a transverse sectional view of the mechanism of Fig. 3, taken substantially on the line IV-IV of Fig. 3;

Fig. 5 is an enlarged sectional view of a portion of the mechanism of Figs. 3 and 4, taken substantially on the line V-V of Fig. 4;

Fig. 6 is an enlarged sectional view of a portion of the mechanism of Figs. 3 and 4, taken substantially on the line VI-VI of Fig. 4;

Fig. 7 is a longitudinal sectional view of a second embodiment of a synchronous clutch mechanism of the invention;

Fig. 8 is a transverse sectional view of the mechanism of claim 7, taken substantially on the line VIII-VIII of Fig. 7;

Fig. 9 is an enlarged sectional view of a portion of the mechanism of Figs. 7 and 9, taken substantially on the line IX-IX of Fig. 8; and

Fig. 10 is an enlarged sectional view of a portion of the mechanism of Figs. 7 and 8, taken substantially on the line X-X of Fig. 8.

The drawings show the principles of the present invention as applied to an inertia lock type

synchronous clutch mechanism and adapted for 1st - 2nd speed change in a vehicular gear transmission, but it will be understood by those skilled in the art that the invention is equally applicable to other gears and transmissions.

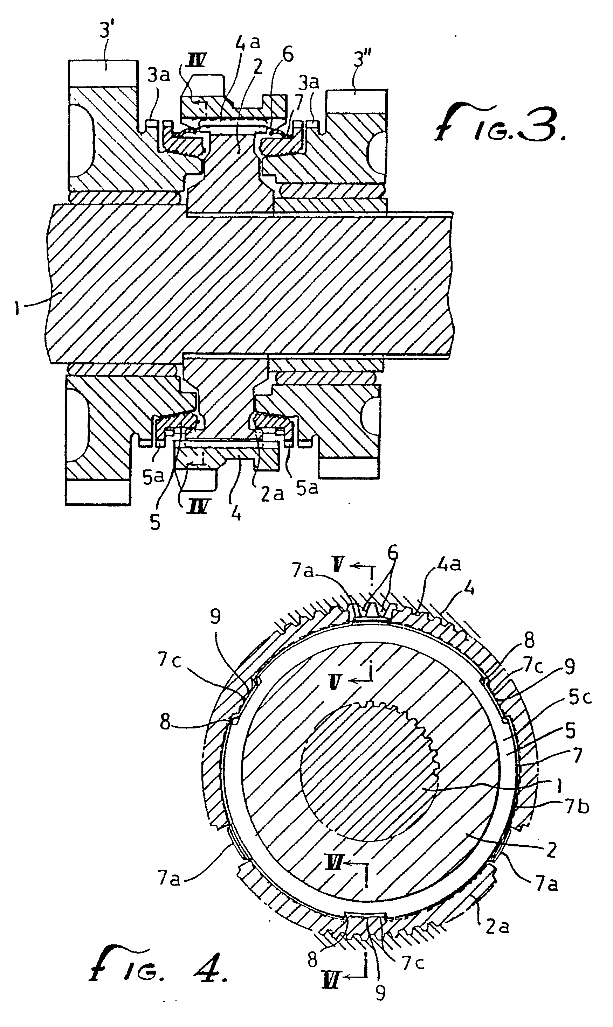

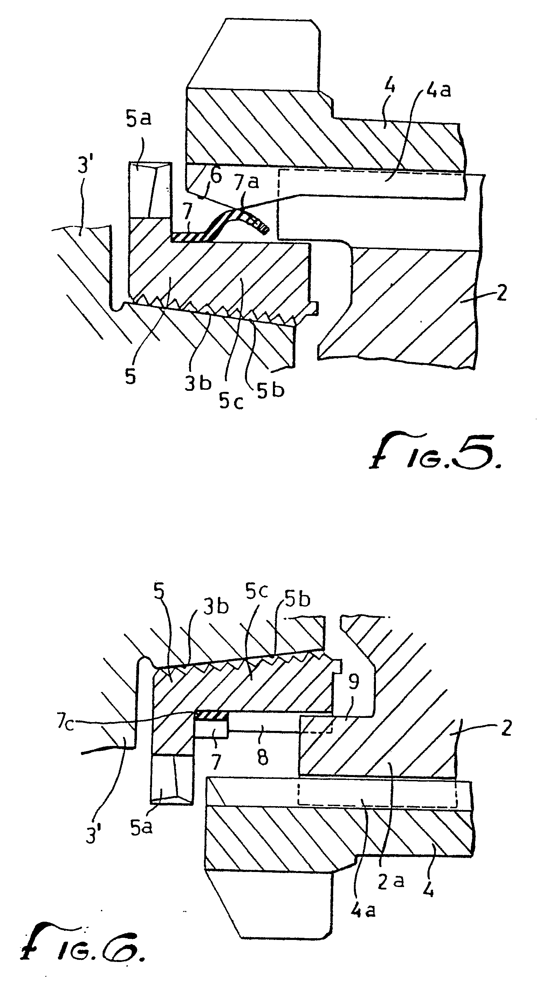

Referring first to the embodiment of Figs. 3 to 6, an output shaft 1 of the transmission has 1st and 2nd speed synchronous gears 3' and 3" rotatably mounted thereon on opposite axial sides of an intermediate clutch hub 2 which is fixed on the shaft 1. A shift sleeve 4 is splined to a rim portion 2a on the outer circumference of the clutch hub 2 so that the inner circumferential splines 4a of the sleeve 4 and the external splines 3a of each of the gears 3' and 3" are able to mesh with each other upon axial shifting of the sleeve 4 from a neutral position (as shown) to one or other axial side by means of a shift fork (not shown), to effect selective connection of either of the gears 3' and 3" to the shaft 1. In order for the rotation of the gear 3' or 3" to be synchronized with the sleeve 4 during that meshing engagement, there is a blocking ring 5 mounted on a tapered cone portion 3b of each of the gears 3' and 3" adjacent the hub 2, each of which blocking rings 5 has splines 5a on its outer circumference and a threaded tapered internal surface 5b. Each of the blocking rings 5 is engaged with the hub 2 in a manner whereby it can rotate relative to the hub by at least one half pitch of the splines, as will be described hereinafter. Moreover, the sleeve 4 is formed with a plurality of, e.g. three, radially sloping cam portions 6 each comprising a pair of cams protruding from each axial end of the sleeve 4 and arranged so that the three cam portions 6 are angularly spaced by 120 degrees. Mounted between the sleeve 4 and each of the blocking rings 5 is a respective elastic member 7 arranged to be engaged by the cam portions 6 of each pair. With this construction, as the sleeve 4 is shifted from its neutral position to either axial side, e.g. toward the 1st speed synchronized gear 3', the blocking ring 5 on that side is first moved axially by its associated elastic ring member 7 into frictional engagement with the tapered cone portion 3b of the gear 3', by way of the threaded tapered surface 5b forming the inner circumference of the blocking ring 5. This causes the ring 5 to be rotated a small amount relative to the clutch hub so that it is indexed into the state in which chamfers at the end portions of the splines 4a of the sleeve 4 and chamfers of the splines 5a of the blocking ring 5 face each other. Further axial movement of the sleeve 4 from that state causes the elastic ring member 7 to be pressed radially inwardly at the respective cam portions 6, and the two chamfers abut against each other to stop the relative rotational movement of the sleeve 4 and to force the ring 5 into frictional engagement with the tapered cone portion 3b on the gear 3', so that synchronization between the sleeve 4 and the gear 3' is effected through the ring 5. After completion of this synchronization, the frictional torque transmitted through the ring 5 and cone portion 3b disappears, to release the blocking force of the sleeve 4, whereupon the sleeve is allowed to move axially so that its splines 4a slide through the splines 5a of the ring 5 and into engagement with the splines 3a of the gear 3'.

The operation of the clutch mechanism as thus far described is not substantially different from that of the aforementioned prior art mechanism. However, in this first embodiment of the invention, as shown in Figs. 3 to 6, each of the blocking rings 5 is provided at each of its three portions corresponding to the locations of the respective cam portions 6 with a tongue-shaped elastic element 7a which can be elastically deformed radially inwardly to constrict each of the aforementioned elastic members 7. In the illustrated construction, these elastic elements 7a protrude integrally from a common ring body 7b which is fitted on the boss portion 5c of each of the blocking rings 5. The body 7b is also engaged with respective grooves 8 in the outer circumference of the boss portion 5c at respective radially recessed portions 7c which are formed between the protrusions 7a of the elastic elements.

In this construction, the clutch hub 2 is formed on the inner circumference of its rim portion 2a with engagement lands 9 which are adapted to engage with the respective grooves 8 of the blocking rings 5 with some circumferential play so that the blocking rings 5 can rotate relative to the hub 2 by at least one half pitch of the splines, as has been described hereinbefore.

The manner of operation of the mechanism of Figs. 3 to 6 will now be described. When the sleeve 4 is shifted axially to either side, so as to effect a shift to 1st speed for example, the respective cam portions 6 on the inner circumference of the sleeve 4 first abut against the respective elastic elements 7a and in turn on the blocking ring 5 on that side, so that the ring 5 is moved axially by the elastic elements 7a, whereby the indexing action and the balking action are accomplished to effect synchronization between the 1st speed synchronized gear 3' and the sleeve 4. After completion of this synchronization, the cam portions push down on the respective elastic members 7a to displace them radially inwardly and ride over the same. The portions of each of the elastic members other than those engaged by the respective cam portions would be caused to bulge and deform radially outwardly, if that elastic member were to be simply a circular ring as in the aforementioned example of the prior art. In the present apparatus, however, such bulging and deformation are not caused at the portions of the elastic ring extending circumferentially between the elastic elements 7a, so that elastic ring member 7 does not interfere with splines 4a of the sleeve 4 even if those splines 4a are comparatively deep.

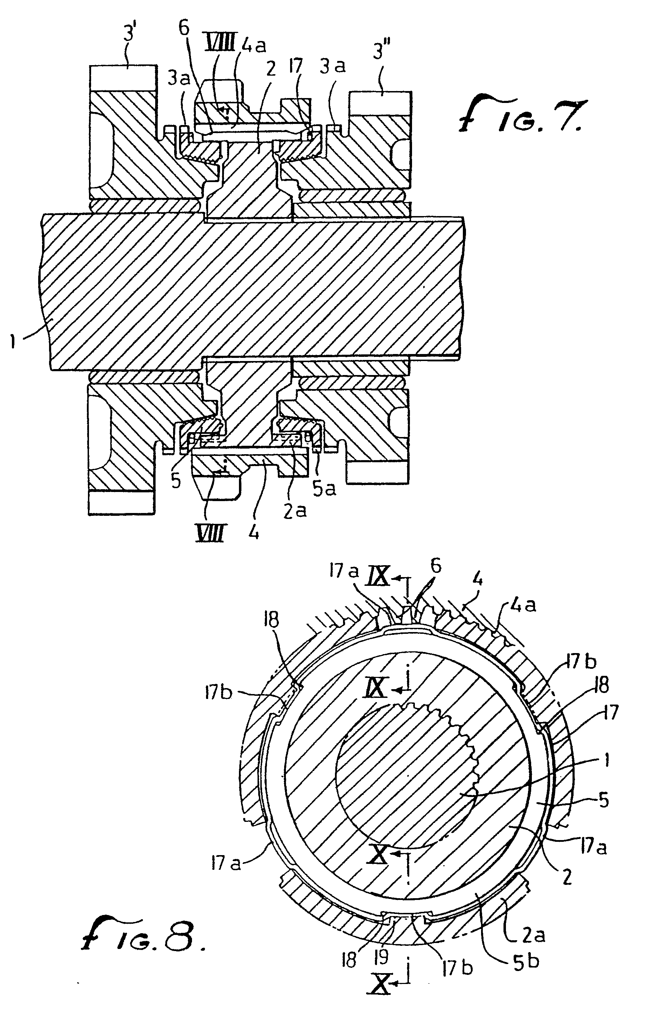

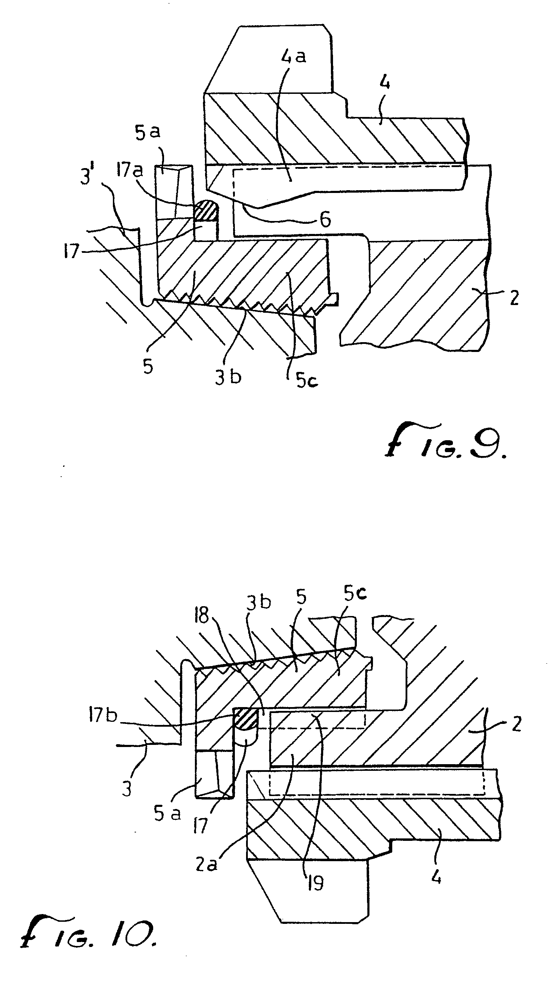

Referring now to the second embodiment shown in Figs. 7 to 10, like components having like functions have been given the same identifying numerals as in the first embodiment and the description thereof will not necessarily be repeated here.

In this second embodiment of the present invention, each of the elastic ring members 17 is formed at circumferentially spaced locations with three radially outwardly protruding portions 17a corre-sponding to the respective locations of the aforementioned cam portions 6, and three radially recessed portions 17b between those portions 17a. Each of the elastic ring members 17 is mounted on the boss portion 5c of its associated blocking ring 5 and engages in three circumferentially spaced grooves 18 which are formed in the outer circumference of the boss portion 5c so that the elastic ring member does not freely rotate relative to the corresponding blocking ring 5.

Again, as with the first embodiment, the clutch hub 2 is formed on the inner circumference of its rib portion 2a with engagement lands 9 which are adapted to engage with the respective grooves 18 of the blocking rings 5 with some circumferential play so that the blocking rings 5 can rotate relative to the hub 2 by at least one half pitch of the splines, as has been described hereinbefore.

The manner of operation of the second embodiment will now be described. When the sleeve 4 is shifted axially to either side, so as to effect a shift to 1st speed for example, the respective cam portions 6 on the inner circumference of the sleeve 4 first abut against the respective radially outwardly protruding portions 17a of the elastic ring member 17, which is fixed against rotation relative to its associated blocking ring 5, and in turn the blocking ring is moved axially by the elastic ring member l7, whereby the indexing action and the balking action are accomplished so as to effect synchronization between the 1st speed gear 3' and the sleeve 4. Upon completion of this synchronization, the cam portions 6 push down on the respective elastic ring portions 17a to displace them radially inwardly and ride over the same. At this time, the elastic ring member 17 is more or less bulged and deformed radially outward at its portions between the respective portions 17a. However, the ring member 17 does not interfere with the splines 4a of sleeve 4 even if the splines are comparatively deep, because the elastic ring member 17 is contoured such that its radially outwardly protruding portions 17a are of the normal, operative, diameter and the remaining portions are radially smaller.

Thus, in the above described embodiments of the present invention, the elastic ring members are formed with radially outwardly protruding portions and radially recessed portions, the latter of which are engaged with respective grooves in the boss portions of the blocking rings to prevent rotation of the ring members, and the former of which are engagable by the respective cam portions on the inner circumference of the sleeve. As compared with the aforementioned example of the prior art in which the elastic ring members are made of simple circular rings, the elastic ring members of these embodiments are prevented from being bulged and deformed outwardly at the portions other than the portions engaged by the cam portions, so that they do not interfere with the sleeve splines. This has the advantage that the sleeve splines can be made deeper than those of the prior art.

## Claims

1. An inertia lock type synchronous clutch mechanism in which an elastic ring member (7,17) on a blocking ring (5) is engageable by a plurality of circumferentially spaced sloping cam portions (6) protruding from the inner circumference of a shift sleeve (4) splined to a clutch hub (1) so that said blocking ring (5) is movable axially into frictional engagement with a tapered cone portion (36) of a synchronized gear (31) by force applied through said elastic ring member (7,17) by the axial shifting of said sleeve, wherein said elastic ring member (7,17) is provided at a plurality of circumferentially spaced locations corresponding to the said cam portions (6) with elastic elements (7a,17a) engageable by the cam portions, each said element comprising a discrete projection extending circumferentially a distance corresponding substantially to a said cam portion (6) and protruding radially outwardly a substantially uniform amount along the circumferential extent of each said element relative to the remaining portions (7b) of the ring member (7,17) which are not engageable by the cam portions, and said elements (7a,17a) being elastically deformable by the cam portions (6) in the radially inward direction to constrict the said ring member without causing said remaining portions of the ring member to deform radially outwardly to an extent which would interfere with splines (4a) of said inner circumference of the shift sleeve (4), characterised in that the ring member (7,17) is one-piece having radially recessed portions (7c,17b) between the radially outwardly protruding elastic elements (7a ,17a), there being circumferentially spaced grooves (8,18) in the outer circumference of said blocking ring (5) arranged to receive said radially recessed portions (7c,17b) to prevent excessive bulging of said elastic ring member (7,17) upon engagement by said cam portions (6).

2. A mechanism as claimed in claim 1, wherein the elastic ring member (7,17) is of endless, closed form.

## Revendications

1. .Mécanisme d'embrayage synchrone du type à verrouillage par inertie, dans lequel un organe annulaire élastique (7, 17) placé sur un anneau de blocage (5) est destiné à coopérer avec plusieurs parties inclinées (6) de came qui sont espacées circonférentiellement et dépassent de la circonférence interne d'un manchon (4) de déplacement qui coopère par l'intermédiaire de cannelures avec un moyeu (1) d'embrayage, afin que l'anneau de blocage (5) puisse être déplacé axialement et puisse venir coopérer par friction avec une partie tronconique (36) d'un pignon synchronisé (31) sous l'action de la force appliquée par l'intermédiaire de l'organe annulaire élastique (7, 17) à la suite du déplacement axial du manchon, et dans lequel l'organe annulaire élastique (7, 17) a, à plusieurs emplacements espacés circonférentiellement qui correspondent aux parties (6) de came, des éléments élastiques (7a, 17a) destinés à être au contact des parties de came, chaque élément comportant une saillie séparée disposée circonférentiellement sur une distance qui correspond pratiquement à une partie de came (6) et dépassant radialement vers l'extérieur sur une distance sensiblement uniforme sur toute l'étendue circonférentielle de l'élément, par rapport aux parties restantes (7b) de l'organe annulaire (7, 17) qui ne sont pas destinées à être au contact des parties de came, les éléments (7a, 17a) étant élastiquement déformables sous l'action des parties de came (6), en direction radiale vers l'intérieur, afin que l'organe annulaire soit rétréci sans que les parties restantes de l'organe annulaire ne se déforment radialement vers l'extérieur au point de venir au contact des cannelures (4a) de la circonférence intérieure du manchon (4) de déplacement, caractérisé en ce que l'organe annulaire (7, 17) est formé en une seule pièce ayant des parties évidées radialement (7c, 17b) placées entre les éléments élastiques (7a, 17a) qui dépassent radialement vers l'extérieur, des gorges espacées circonférentiellement (8, 18) étant formées à la circonférence intérieure de l'anneau de blocage (5) et étant destinées à loger les parties évidées radialement (7c, 17b) de manière qu'un renflement excessif de l'organe annulaire élastique (7, 17) soit évité lors du contact avec les parties de came (6).

2. Mécanisme selon la revendication 1, dans lequel l'organe annulaire élastique (7, 17) a une forme fermée sans interruption.

## Patentansprüche

1. Trägheits-Sperrsynchronisations-Kupplungsmechanismus, bei dem ein elastisches Ringteil (7,17) an einem Sperring (5) in Eingriff mit einer Vielzahl in Umfangsrichtung beabstandeter angeschrägter Anlageabschnitte (6) bringbar ist, die von dem Innenumfang einer Schaltmuffe (4) vorstehen, die auf einer Kupplungsnabe (1) längsverzahnt sitzt, sodaß der Sperring (5) axial in Reibeingriff mit einem angespitzten Konusabschnitt (36) eines synchronisierten Zahnrades (31) durch eine Kraft bewegbar ist, die durch Axialverschiebung der Muffe über das elastische Ringteil (7,17) angelegt wird, wobei das elastische Ringteil (7,17) an einer Vielzahl von in Umfangsrichtung beabstandeten Stellen entsprechend den Anlageabschnitten (6) mit elastischen Elementen (7a,17a) versehen ist, die mit den Anlageabschnitten in Eingriff bringbar sind, wobei jedes Element einen diskreten Vorsprung aufweist, der sich in Umfangsrichtung mit einem dem Anlageabschnitt (6) im wesentlichen entsprechenden Abstand erstreckt und radial nach außen vorsteht um einen im wesentlichen einheitlichen Betrag längs der Umfangsausdehnung jedes Elements relativ zu den verbleibenden Abschnitten (7b) des Ringteils (7,17), die mit den Anlageabschnitten nicht in Eingriff bringbar sind, und wobei die Elemente (7a,17a) durch die Anlageabschnitte (6) in Richtung radial einwärts elastisch verformbar sind, um das Ringteil zusammenzudrücken, ohne eine Verformung der verbleibenden Abschnitte des Ringteils radial nach außen in einem Ausmaß zu bewirken, das mit Längsverzahnungen (4a) des Innenumfangs der Schaltmuffe (4) störend Zusammenwirken würde, **dadurch gekennzeichnet,** daß das Ringteil (7,17) einstückig ist mit radialen Ausnehmungsabschnitten (7c,17b) zwischen den radial nach außen vorstehenden elastischen Elementen (7a,17a), wobei in dem Außenumfang des Sperrings (5) in Umfangsrichtung beabstandete Nuten (8,18) vorgesehen sind, die zur Aufnahme der radialen Ausnehmungsabschnitte (7c,17b) angeordnet sind, um ein übermäßiges Ausbeulen des elastischen Ringteils (7,17) nach Eingriff durch die Anlageabschnitte (6) zu verhindern.

2. Mechanismus nach Anspruch 1, in dem das elastische Ringteil (7,17) eine endlose geschlossene Form hat.

# FIG. 1.

# FIG. 2.

f IG. 3.

f IG. 4.

FIG.5.

FIG.6.

fIG.7.

fIG.8.

FIG. 9.

FIG. 10.